# EUROPÄISCHE PATENTSCHRIFT

(11) **EP 3 074 272 B1**
(45) Veröffentlichungstag und Bekanntmachung des Hinweises auf die Patenterteilung: **17.04.2019**
(21) Anmeldenummer: 14802643.8
(22) Anmeldetag: 21.11.2014
(51) Int. Cl.: B60N 2/75

(54) **SYSTEM MIT EINER SCHWENKBAREN ARMLEHNE UND EINER ARRETIERHILFE**
SYSTEM WITH A PIVOTABLE ARMREST AND A LOCKING AID
SYSTÈME POURVU D'UN ACCOUDOIR PIVOTANT ET D'UN AUXILIAIRE DE BLOCAGE

(30) Priorität: 27.11.2013 DE 102013019717; 31.03.2014 DE 102014206030
(43) Veröffentlichungstag der Anmeldung: 05.10.2016
(73) Patentinhaber: Adient Luxembourg Holding S.à r.l., 1855 Luxembourg (LU)
(72) Erfinder: JAKUBEC, Ivan, 91701 Trnava (SK); REZBARIK, Miroslav, 91101 Trencin (SK); MARTINKA, Michal, 91501 Nove Mesto nad Vahom (SK)
(74) Vertreter: Loock, Jan Pieter
(86) Internationale Anmeldenummer: PCT/EP2014/075325
(87) Internationale Veröffentlichungsnummer: WO 2015/078793

(56) Entgegenhaltungen:
- EP-A2- 1 080 985
- DE-A1-102010 051 699
- DE-B3- 10 194 785
- US-A- 4 848 840

## Beschreibung

### Stand der Technik

Die vorliegende Erfindung betrifft schwenkbare Armlehnen. Schwenkbare Armlehnen sind aus dem Stand der Technik bekannt und lassen sich häufig an Fahrzeugsitzen, vorzugsweise an deren Rückenlehnen, finden. Insbesondere lassen sich schwenkbare Armlehnen, wenn sie gerade nicht gebraucht werden, platzsparend in eine Verstaustellung überführen. Typischerweise umfasst die Rückenlehne eine Aussparung, in die die schwenkbare Armlehne zum Verstauen hineingedrückt werden kann. In der Gebrauchsstellung kann die Armlehne nicht nur als Stütze für den Arm dienen, sondern den Komfort für den Passagier durch zusätzliche Staufläche oder leicht zugängliche Bedienelemente weiter erhöhen. Die Patentanmeldung EP1080985 A2 offenbart ein Beispiel einer schwenkbaren Armlehne aus dem Stand der Technik.

Es erweist sich als Nachteil der schwenkbaren Armlehnen, dass dem Passagier bei der Überführung oftmals nicht klar ist, ob die schwenkbare Armlehne bereits die Verstaustellung bzw. eine Gebrauchsstellung eingenommen hat oder ob sie sich noch in einer Übergangsstellung befindet.

### Offenbarung der Erfindung

Es ist Aufgabe der vorliegenden Erfindung, ein System zur Verfügung zu stellen, mit dessen Hilfe dem Passagier geholfen wird zu erkennen, ob bei der Überführung der Armlehne bereits eine Verstaustellung oder eine Gebrauchsstellung eingenommen wurde. Außerdem soll das System die Fixierung der schwenkbaren Armlehne in der Gebrauchsstellung oder der Verstaustellung unterstützen.

Die Aufgabe der vorliegenden Erfindung wird, gemäß Anspruch 1 gelöst durch ein System mit einer schwenkbaren Armlehne, einem Halterungsmittel und einer Arretierhilfe, wobei die Armlehne an einem Halterungsmittel um eine Primärachse verschwenkbar angelenkt ist und über eine Übergangsstellung reversibel zwischen einer Gebrauchsstellung und einer Verstaustellung überführbar ist, wobei die Armlehne drehfest mit einem Verbindungselement verbunden ist, wobei am Verbindungselement eine mit dem Halterungsmittel in reibschlüssigem Kontakt stehende Arretierhilfe angeordnet ist, wobei die Arretierhilfe derart ausgestaltet ist, dass der reibschlüssige Kontakt zwischen Halterungsmittel und Arretierhilfe in einer Übergangsstellung größer ist als
-- in der Gebrauchsstellung und/oder
-- in der Verstaustellung.

Durch den erhöhten Reibschluss in der Übergangsstellung wird beim Überführen der Armlehne ein dem Verschwenken der Armlehne entgegenwirkender Widerstand in der Übergangsstellung realisiert, der größer ist als der in der Gebrauchsstellung und/oder in der Verstaustellung. Anhand einer Widerstandsänderung beim Überführen der Armlehne von der Übergangsstellung in die Gebrauchsstellung bzw. in die Verstaustellung kann der Passagier dann in vorteilhafter Weise auf das Erreichen der Gebrauchsstellung oder der Verstaustellung aufmerksam gemacht werden. Es ist dabei vorstellbar, dass die Arretierhilfe oder das Halterungsmittel derart ausgestaltet sind, dass sich der Widerstand beim Verschwenken der Armlehne von der Gebrauchsstellung in die Verstaustellung (oder umgekehrt) ändert, insbesondere kontinuierlich ändert. Weiterhin ist es vorgesehen, dass die Armlehne in der Verstaustellung im Wesentlichen vertikal und in der Gebrauchsstellung im Wesentlichen horizontal angeordnet ist. Insbesondere ist es vorgesehen, dass die Armlehne
-- von der Verstaustellung in die Gebrauchsstellung durch eine Schwenkbewegung um die Primärachse entlang einer ersten Drehrichtung überführt wird und
-- von der Gebrauchsstellung in die Verstaustellung durch eine Schwenkbewegung um die Primärachse entlang einer zweiten Drehrichtung überführt wird, wobei die erste Drehrichtung der zweiten Drehrichtung entgegengesetzt ist.

Vorteilhafte Ausgestaltungen und Weiterbildungen der Erfindung sind den Unteransprüchen sowie der Beschreibung unter Bezugnahme auf die Zeichnungen entnehmbar.

Erfindungsgemäß ist es vorgesehen, dass die Arretierhilfe einen verschiebbaren Teil umfasst, wobei der verschiebbare Teil relativ zum Verbindungselement entlang einer Versatzrichtung verschiebbar ist. Insbesondere ist es vorgesehen, dass die Versatzrichtung durch den generellen Verlauf des Verbindungselements vorgegeben ist. Dabei ist weiterhin vorgesehen, dass das verschiebbare Teil entlang der Versatzrichtung verschoben wird, sobald die Verstauposition oder die Gebrauchsstellung von der Armlehne verlassen wird. Mit anderen Worten: In der Übergangsstellung ist der verschiebbare Teil relativ zum Verbindungselement anders positioniert als in der Gebrauchsstellung oder Verstaustellung.

In einer weiteren Ausführungsform ist es vorgesehen, dass die Arretierhilfe ein Federelement mit einer Rückstellkraft aufweist, wobei das Federelement zwischen dem Verbindungselement und dem Halterungsmittel angeordnet ist. Insbesondere wirkt die Rückstellkraft entlang einer zur Versatzrichtung parallel verlaufenden Richtung. Vorzugsweise steht das Federelement in Wirkverbindung mit dem verstellbaren Teil und sorgt für eine Positionierung des verstellbaren Teils entlang des Verbindungselements.

In einer weiteren Ausführungsform ist es vorgesehen, dass der verschiebbare Teil der Arretierhilfe einen Hohlkörper aufweist, wobei der Hohlkörper zumindest teilweise das Verbindungselement und das Federelement umhüllt. Insbesondere ist es vorgesehen, dass der verschiebbare Teil derart geformt ist, dass der verschiebbare Teil im Wesentlichen vom Verbindungselement entlang der Versatzrichtung geführt wird. Dadurch kann in vorteilhafter Weise eine von der Arretierhilfe ausgehende Kraft auf das Halterungsmittel kanalisiert werden, ohne dass die Gefahr besteht, dass die Arretierhilfe mit gespanntem Federelement seitlich, d. h. entlang einer senkrecht zur Versatzrichtung verlaufenden Richtung, ausbricht.

In einer weiteren Ausführungsform ist es vorgesehen, dass der verschiebbare Teil der Arretierhilfe einen Vorsprung aufweist, wobei der Vorsprung derart ausgestaltet ist, dass der Vorsprung in reibschlüssigem Kontakt steht mit dem Halterungsmittel. Mit dem Vorsprung lässt sich die Kontaktfläche minimieren, wodurch ein schneller Übergang zwischen einem hohen Reibschluss in der Übergangsstellung und einem dazu vergleichsweise kleinen Reibschluss in der Gebrauchsstellung oder der Verstaustellung realisierbar ist. Insbesondere ist es vorstellbar, dass das Halterungsmittel derart ausgestaltet ist, dass der Vorsprung
-- zum Verlassen der Verstaustellung durch eine Schwenkbewegung entlang der ersten Drehrichtung über eine Rampe geführt wird und/oder
-- zum Verlassen der Gebrauchsstellung durch eine Schwenkbewegung entlang der zweiten Drehrichtung über eine Rampe geführt wird. Es ist dabei vorstellbar, dass die Rampe jeweils derart ausgestaltet ist, dass ein erhöhter Kraftaufwand für das Verschwenken der Armlehne aus der Verstauposition oder aus der Gebrauchsstellung erforderlich ist.

In einer weiteren Ausführungsform ist es vorgesehen, dass die Arretierhilfe derart ausgestaltet ist, dass das Federelement den verschiebbaren Teil der Arretierhilfe gegen das Halterungsmittel drückt. Insbesondere drückt das Federelement das verstellbare Teil in der Übergangsstellung stärker gegen das Halterungsmittel als in der Gebrauchsstellung und/oder der Verstaustellung. Weiterhin ist es denkbar, dass elastische Eigenschaften des Federelements an die Anforderungen des Systems mit schwenkbarer Armlehne und Arretierhilfe anpassbar sind.

Erfindungsgemäß ist es vorgesehen, dass das Halterungselement derart ausgestaltet ist, dass der Abstand zwischen
-- einem ersten Ende des Federelements und
-- dem Kontaktpunkt oder der Kontaktfläche kleiner ist in der Übergangsstellung als in der Gebrauchsstellung oder Verstaustellung. Durch die Ausformung bzw. Ausgestaltung des Halterungsmittels lässt sich die Änderung im reibschlüssigen Kontakt realisieren. Insbesondere ist es vorgesehen, dass das verstellbare Teil bei der Überführung von der Verstaustellung in die Gebrauchsstellung entlang einer Kontur des Halterungsmittels geführt wird. Es ist dabei vorstellbar, dass zur weiteren Erhöhung des Reibschlusses in der Übergangsstellung die Kontur des Halterungsmittels entlang eines Bereiches aufgeraut ist, wobei der aufgeraute Bereich vom verstellbaren Teil bei der Überführung der Armlehne von der Gebrauchsstellung in die Verstaustellung oder umgekehrt kontaktiert wird.

Erfindungsgemäß ist es vorgesehen, dass das Halterungsmittel eine Führungskappe aufweist, wobei die Führungskappe den Abstand zwischen
-- dem ersten Ende des Federelements und
-- dem Kontaktpunkt oder der Kontaktfläche
für die Gebrauchsstellung, die Übergangsstellung und die Verbrauchsstellung festlegt. Insbesondere ist die Führungskappe aus einem anderen Material als das Halterungsmittel und/oder die Führungskappe ist mit dem Halterungsmittel verschweißt oder verklipst.

Ein weiterer Gegenstand der vorliegenden Erfindung ist eine Rückenlehne aufweisend ein System mit einer schwenkbaren Armlehne und einer Arretrerhilfe, wie es oben beschrieben wurde.

Ein weiterer Gegenstand der vorliegenden Erfindung ist ein Fahrzeugsitz aufweisend ein System mit einer schwenkbaren Armlehne und einer Arretierhilfe, wie es oben beschrieben wurde.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen.

### Kurze Beschreibung der Figuren

**Figur 1** zeigt in vier Abbildungen Beispiele für schwenkbare Armlehnen.
**Figur 2** zeigt ein System mit schwenkbarer Armlehne und Arretierhilfe gemäß einer ersten beispielhaften Ausführungsform in einer Verstaustellung und in einer Gebrauchsstellung.
**Figur 3** zeigt ein Halterungsmittel für ein System mit einer schwenkbaren Armlehne und einer Arretierhilfe gemäß der ersten beispielhaften Ausführungsform der vorliegenden Erfindung in einer Explosionsdarstellung und in perspektivischen Ansichten.
**Figur 4** zeigt die Arretierhilfe für das System mit der schwenkbaren Armlehne und der Arretierhilfe gemäß der ersten beispielhaften Ausführungsform der vorliegenden Erfindung.
**Figur 5** zeigt im Detail das Halterungsmittel für das System mit der schwenkbaren Armlehne und der Arretierhilfe gemäß der ersten beispielhaften Ausführungsform der vorliegenden Erfindung in einer Seitenansicht, wobei sich die Armlehne von links nach rechts in der Verstaustellung, in einer Übergangsstellung und in der Gebrauchsstellung befindet.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

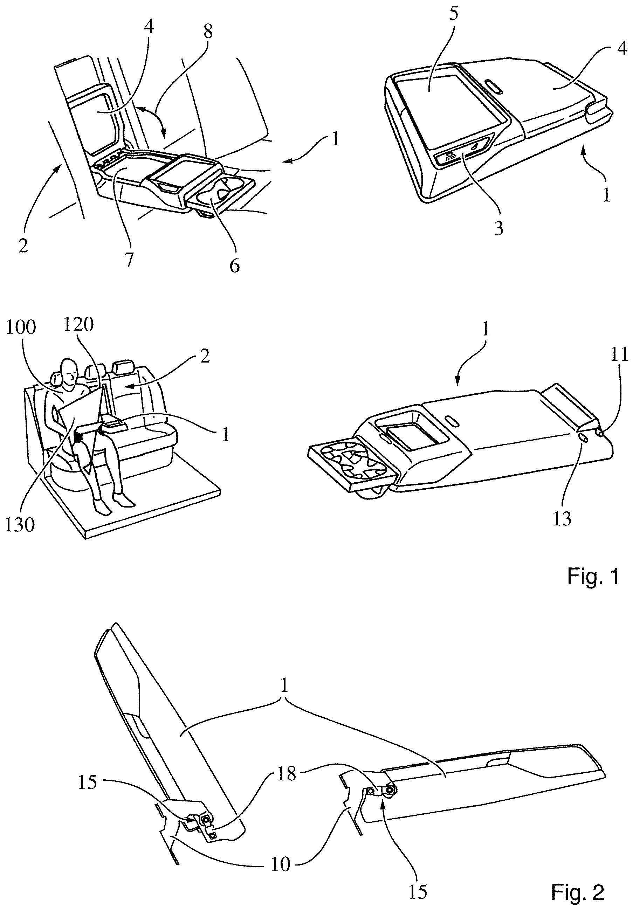

In **Figur 1** sind in vier Abbildungen Beispiele für schwenkbare Armlehnen 1 dargestellt, die die vorliegende Erfindung betreffen. Vorzugsweise sind solche Armlehnen 1 in eine Rückenlehne 2 eines Fahrzeugsitzes, insbesondere in die Rückenlehne 2 einer Rückbank eines Fahrzeugs, integriert. Dabei lässt sich die Armlehne 1 zwischen einer Verstaustellung und einer Gebrauchsstellung reversibel überführen. In der Gebrauchsstellung kann ein Passagier 100 des Fahrzeugs seinen Arm auf der Armlehne abstützen. Insbesondere ist die Armlehne derart mit einer Polsterung ummantelt, dass der Passagier 100 sich in der Verstaustellung mit seinem Rücken an eine erste gepolsterte Seite der Armlehne 1 anlehnen und in der Gebrauchsstellung mit seinem Arm auf einer zweiten gepolsterten Seite der Armlehne 1 abstützen kann. Zudem ist es vorstellbar, dass die Armlehne 1 über einen Stauraum 7 verfügt, der in der Gebrauchsstellung über eine in die Armlehne 1 eingelassene Klappe 4 zugänglich ist. Insbesondere ist es denkbar, dass die Klappe 4 um eine Klappachse 13 durch eine Kippbewegung 8 verschwenkbar an die Armlehne 1 angelenkt ist. Weiterhin ist es vorstellbar, dass die Armlehne 1 zumindest teilweise dem Passagier 100 eine Stellfläche 5, insbesondere im vorderen Drittel der Armlehne 1, zur Verfügung stellt, auf der der Passagier 100 in der Gebrauchsstellung der Armlehne 1 Gegenstände zwischenlagern bzw. abstellen kann. Zudem ist es denkbar, dass die schwenkbare Armlehne 1 Betätigungselemente 3, wie beispielsweise Druckknöpfe, Drehknöpfe oder andere Schalter, insbesondere in eine Steuertafel bzw. Schalttafel integriert, aufweist, wobei das Betätigen des Betätigungselements 3 eine Änderung im Fahrzeuginnenraum, vorzugsweise am Fahrzeugsitz, hervorruft. Beispielsweise lässt sich die Temperatur oder die Beleuchtung im Fahrzeuginnenraum mittels des Betätigungsmittels ändern. Zudem ist es vorstellbar, dass die schwenkbare Armlehne 1 einen Getränkehalter 6 umfasst, wobei der Getränkehalter 6 in der Gebrauchsstellung aus der Armlehne 1 herausgezogen werden kann. Weiterhin ist es vorgesehen, dass die Rückenlehne 2 des Fahrzeugsitzes eine Rückenlehnenaussparung aufweist, in die die Armlehne 1 für die Einnahme der Verstaustellung hineingedrückt werden kann. Vorzugweise weist die Rückenlehnenaussparung eine beleuchtete Wandung auf, die ein Umgebungslicht für den Fahrzeuginnenraum zur Verfügung stellt. Insbesondere weist die Rückenlehnenaussparung eine Wandung auf, an der Lichtquellen 120 anordbar sind, wobei ein von der Lichtquelle 120 verursachter Lichtkegel 130 auf das Blickfeld des Passagiers 100 gerichtet ist und dadurch beispielsweise dem Passagier 100 das Lesen erleichtert. Insbesondere ist es vorstellbar, dass die Lichtquelle 120 verschwenkbar und dadurch der Lichtkegel 130 individuell einstellbar ist.

In **Figur 2** ist eine Armlehne 1 gemäß einer beispielhaften ersten Ausführungsform der vorliegenden Erfindung dargestellt, wobei sich die Armlehne 1 auf der linken Seite in der Verstaustellung und auf der rechten Seite in der Gebrauchsstellung befindet. Es ist dabei vorgesehen, dass die Armlehne 1 beim Übergang von der Verstaustellung in die Gebrauchsstellung im Wesentlichen um 90° verschwenkt wird. Vorzugsweise ist die Armlehne 1, insbesondere ein genereller Verlauf der Armlehne 1, in der Verstaustellung im Wesentlichen vertikal und in der Gebrauchsstellung im Wesentlichen horizontal angeordnet. Zum Verschwenken ist die Armlehne 1 an ein Halterungsmittel 10 angelenkt, wobei das Halterungsmittel 10 seinerseits starr mit einem Teil des Fahrzeugs, vorzugsweise der Rückenlehne 2 des Fahrzeugsitzes, verbunden ist. Ein Verbindungselement 15 ist an mindestens zwei Stellen fest mit der Armlehne 1 verbunden. Insbesondere ist das Verbindungselement 15 drehfest mit der Armlehne 1 verbunden, d.h. das Verbindungselement 15 wird beim Verschwenken der Armlehne 1 mitverschwenkt. Weiterhin ist es vorgesehen, dass das Verbindungselement 15 ein Stoppelement 19, das ein Verschwenken der Armlehne 1 über die Gebrauchsstellung hinaus verhindert, aufweist. Dabei ist es vorgesehen, dass das Stoppelement 19 bei der Einnahme der Gebrauchsstellung mit dem Halterungsmittel 10 entlang einer senkrecht zur Primärachse 11 verlaufenden Richtung formschlüssig mit einem Anschlag 21 des Halterungsmittels 10 zusammenwirkt und dadurch eine Schwenkbewegung der Armlehne bei der Überführung von der Verstaustellung in die Gebrauchsstellung beendet. Insbesondere ist es vorgesehen, dass das Verbindungselement 15 eine Schwenkbewegung entlang einer ersten Drehrichtung beendet, indem das Stoppelement 19 mit dem Halterungsmittel 10, insbesondere mit dessen Anschlag 21, formschlüssig entlang einer parallel zur ersten Drehrichtung 31 verlaufenden Richtung zusammenwirkt, wobei die Armlehne 1 von der Verstaustellung in die Gebrauchsstellung durch eine Schwenkbewegung entlang der ersten Drehrichtung 31 überführbar ist. Weiterhin ist an dem Verbindungselement 15 die Arretierhilfe angeordnet. Die Arretierhilfe 18 ist derart ausgestaltet, dass die für die Schwenkbewegung erforderliche Kraft entlang der ersten Drehrichtung 31 von der Verstaustellung zur Gebrauchsstellung, vorzugsweise kontinuierlich, zunächst zunimmt und dann bei der Einnahme der Gebrauchsstellung, vorzugsweise unmittelbar, wieder abnimmt. Der Passagier 100 erkennt dadurch in vorteilhafter Weise, ob die Gebrauchsstellung/Verstaustellung von der Armlehne 1 eingenommen wurde oder nicht. Die Arretierhilfe 18 erleichtert daher dem Passagier 100 die Überführung der Armlehne von der Verstaustellung in die Gebrauchsstellung. Zudem kann die Arretierhilfe 18 derart ausgestaltet sein, dass die Arretierhilfe 18 verhindert, dass die Armlehne 1 bei leichten Kraftwirkungen auf die Armlehne 1, beispielsweise durch ein leichtes Rütteln oder Schütteln, die Gebrauchsstellung durch eine Schwenkbewegung der Armlehne entlang einer zweiten Drehrichtung verlässt, wobei die Schwenkbewegung der Armlehne entlang der zweiten Drehrichtung zur Überführung der Armlehne 1 von der Gebrauchsstellung in die Verstaustellung vorgesehen ist. Ist die schwenkbare Armlehne 1 in einem Fahrzeug integriert, dann kann das leichte Rütteln bzw. Schütteln beispielsweise durch eine Bodenwelle oder Ähnliches verursacht werden.

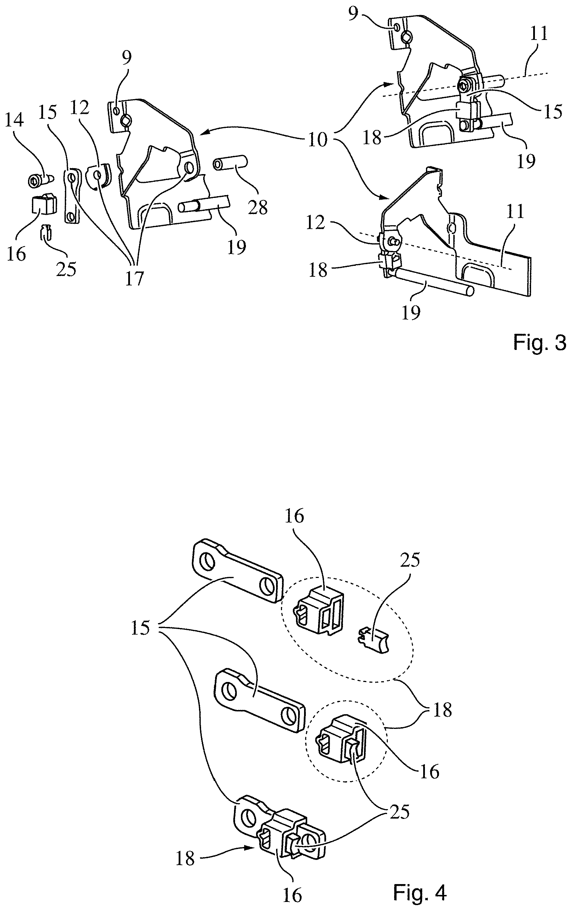

In **Figur 3** ist ein Halterungsmittel 10 für ein System mit einer schwenkbaren Armlehne 1 und einer Arretierhilfe 18 gemäß der ersten beispielhaften Ausführungsform der vorliegenden Erfindung dargestellt, wobei das System auf der linken Seite in einer Explosionsdarstellung und auf der rechten Seite in zusammengefügter Form in zwei perspektivischen Ansichten (Vorder- und Rückansicht) illustriert ist. Es ist dabei vorgesehen, dass das Halterungsmittel 10 einen Grundkörper aufweist, der über Befestigungsvorrichtungen 9 an einem Teil der Fahrzeugkarosserie oder der Innenausstattung, wie beispielsweis an der Rückenlehne 2 des Fahrzeugsitzes, befestigbar ist. Beispielsweise handelt es sich bei der Befestigungsvorrichtung 9 um ein Loch, über das das Halterungsmittel 10 fest an die Fahrzeugkarosserie angeschraubt werden kann. Weiterhin ist es vorgesehen, dass der Grundkörper des Halterungsmittels 10 eine kreisförmige Aussparung 17 aufweist, in der eine um die Primärachse verdrehbare bzw. verschwenkbare Schwenkachse 28 gelagert ist. Vorzugsweise ist es vorgesehen, dass das Verbindungselement 15 und die schwenkbare Armlehne 1 räumlich durch den Grundkörper getrennt und über die in der kreisförmigen Aussparung verdrehbar gelagerte Schwenkachse 28 drehfest miteinander verbunden sind. Zur Verbindung von der schwenkbaren Armlehne 1 und/oder dem Verbindungselement 15 mit der Schwenkachse 28 ist ein Verknüpfungsmittel, wie beispielsweise eine Schraube 14, vorgesehen. Weiterhin ist es vorgesehen, dass die Arretierhilfe 18 am Verbindungselement 15, insbesondere zwischen Stoppelement 19 und Halterungsmittel 10, angeordnet ist. Weiterhin weist das Halterungsmittel 10 eine Führungskappe 12 auf, die das Halterungsmittel 10 zumindest teilweise bedeckt. Dabei weist die Führungskappe 12 vorzugsweise ebenfalls eine kreisförmige Aussparung 17 auf, durch die die Schwenkachse 28 hindurchführt. Weiterhin weist die Arretierhilfe ein Federelement 25 und einen verschiebbaren Teil auf, wobei der verschiebbare Teil hier als Hohlkörper 16 ausgestaltet ist. Der Hohlkörper 16 ummantelt teilweise das Verbindungselement und beherbergt teilweise das Federelement. Der Teil des Hohlkörpers 16, der das Federelement 25 beherbergt, ist auf der der Armlehne 1 zugewandten Seite des Verbindungselements 15 angeordnet. Weiterhin ist das Federelement 25 derart ausgestaltet, dass es auf dem Stoppelement 19 aufliegt. Es ist dabei vorgesehen, dass das Federelement derart ausgestaltete ist, dass sich das Stoppelement 19 relativ zum Federelement 25 verdrehen kann, ohne dass der Kontakt des Stoppelements 19 mit einem ersten Ende des Federelements 25 gelöst wird. Dadurch kann gewährleistet werden, dass das erste Ende des Federelements unabhängig vom Grad der Verschwenkung der Armlehne relativ zum Verbindungselement 15 ortsfest angeordnet ist bzw. bleibt. Insbesondere weist das Federelement 25 am ersten Ende 25 eine Anlagefläche mit einer Krümmung auf, wobei die Krümmung an die Form des Stoppelements 19 angepasst ist. Durch die Krümmung kann die Wahrscheinlichkeit für ein Verrutschen des ersten Endes des Federelements 25 in vorteilhafter Weise reduziert werden. Am zweiten Ende des Federelements ist der verschiebbare Teil der Arretierhilfe angeordnet.

In **Figur 4** ist die Arretierhilfe 18 für das System mit der schwenkbaren Armlehne 1 und der Arretierhilfe 18 gemäß der ersten beispielhaften Ausführungsform der vorliegenden Erfindung in drei verschiedenen Montagezuständen dargestellt. In der oberen Abbildung der Figur 4 sind das Verbindungselement 15, das verschiebbare Teil 16 und das Federelement 25 individuell dargestellt. In der mittleren Abbildung der Figur 4 sind das verschiebbare Teil und das Federelement 25 zur Arretierhilfe 18 zusammengefügt. Dabei ist es vorgesehen, dass das verschiebbare Teil 16 mit dem zweiten Ende des Federelements 25 fest verbunden ist. Vorzugsweise ist das zweite Ende des Federelements 25 mit dem verschiebbaren Teil verklipst. In der unteren Abbildung der Figur 4 ist die Arretierhilfe 18 verschiebbar auf dem Verbindungselement 15 angeordnet. Insbesondere ist es vorgesehen, dass der verschiebbare Teil 16 einen Hohlkörper aufweist, dessen Hohlraum das Verbindungselement 15 aufnehmen kann und dessen Innenwandung zumindest teilweise zur Führung der Arretierhilfe 18 entlang einer Versatzrichtung 32 dient.

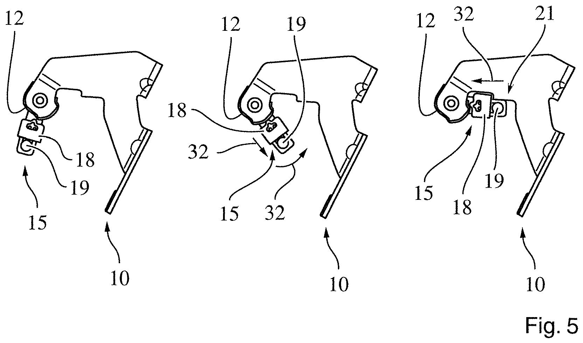

In **Figur 5** ist das Halterungsmittel 10 für das System mit der schwenkbaren Armlehne 1 und der Arretierhilfe 18 gemäß der ersten beispielhaften Ausführungsform der vorliegenden Erfindung in einer Seitenansicht dargestellt, wobei sich die Armlehne 1 von links nach rechts in der Verstaustellung, in einer Übergangsstellung und in der Gebrauchsstellung befindet. Es ist vorgesehen, dass die Arretierhilfe 18 mit dem Halterungsmittel 10 in einem Kontaktpunkt oder entlang einer Kontaktfläche in reibschlüssigem Kontakt steht. Vorzugsweise weist der verschiebbare Teil 16 der Arretierhilfe 18 einen Vorsprung auf, wobei der Vorsprung in reibschlüssigem Kontakt mit dem Halterungsmittel 10 steht. Insbesondere ist es vorgesehen, dass das Federelement 25 derart ausgestaltet und angeordnet ist, dass das Federelement 25 den verschiebbaren Teil der Arretierhilfe 18 auf das Halterungsmittel 10 drückt und dadurch den reibschlüssigen Kontakt zwischen Arretierhilfe 18 und Halterungsmittel 10 realisiert, wobei die Stärke des reibschlüssigen Kontakts durch eine rücktreibende Kraft des Federelements 25 festgelegt wird. Dabei ist es weiterhin vorgesehen, dass das Halterungsmittel 10 derart geformt ist, dass sich der Abstand bei einer Schwenkbewegung der Armlehne 1 zwischen dem erste Ende des Federelements 25 und dem Kontaktpunkt bzw. der Kontaktfläche verändert. Mit der Reduktion dieses Abstandes lässt sich durch die rücktreibende Kraft des Federelements der reibschlüssige Kontakt erhöhen und mit einer Vergrößerung dieses Abstandes lässt sich der reibschlüssige Kontakt verringern. Es ist dabei vorstellbar, dass das Halterungselement
-- eine Ausbuchtung zur Reduktion des Abstandes zwischen dem ersten Ende des Federelements und dem Kontaktpunkt (bzw. der Kontaktfläche) bei einer Schwenkbewegung der Armlehne und/oder
-- eine Einbuchtung zur Vergrößerung des Abstandes zwischen dem ersten Ende des Federelements und dem Kontaktpunkt (bzw. der Kontaktfläche) bei einer Schwenkbewegung der Armlehne
   aufweist. Insbesondere ist es vorgesehen, dass der Abstand zwischen dem ersten Ende des Federelements 25 und dem Kontaktpunkt (bzw. der Kontaktfläche) in der Übergangsstellung geringer ist als in der Gebrauchs- oder Verstaustellung. Dadurch ist der reibschlüssige Kontakt in der Gebrauchsstellung oder der Verstaustellung geringer als in der Übergangsstellung. Weiterhin ist es vorgesehen, dass das verschiebbare Teil bei der Überführung der Armlehne 1 von der Gebrauchsstellung in die Verstaustellung entlang der Versatzrichtung 32 verschoben wird. Insbesondere ist es vorgesehen, dass das Halterungsmittel 10 derart ausgeformt ist, dass das verstellbare Teil 16, insbesondere der Vorsprung, zum Verlassen der Gebrauchsstellung oder der Verbrauchstellung entlang einer Rampe bewegt werden muss. Damit das verstellbare Teil die Rampe überwinden kann, ist ein erhöhter Kraftaufwand beim Verschwenken der Armlehne und damit beim Verschwenken des Verbindungselements 15 erforderlich. Dadurch wird es bei leichten Kraftwirkungen auf die Armlehne 1 erschwert, die Armlehne 1 aus der Verstaustellung oder der Gebrauchsstellung heraus zu verschwenken. Dadurch kann die Arretierhilfe 18 zur Fixierung der Armlehne 1 in der Gebrauchs- oder Verstaustellung in positiver Weise beitragen.

### Bezugszeichenliste

- 1: schwenkbare Armlehne
- 2: Rückenlehne
- 3: Betätigungselement
- 4: Klappe
- 5: Stellfläche
- 6: Getränkehalter
- 7: Stauraum
- 8: Kippbewegung
- 9: Befestigungsvorrichtung
- 10: Halterungsmittel
- 11: Primärachse
- 12: Führungskappe
- 13: Klappachse
- 14: Schraube
- 15: Verbindungselement
- 16: Hohlkörper, verschiebbares Teil
- 17: kreisförmige Aussparung
- 18: Pendelelement, Arretierhilfe
- 19: Stoppelement
- 21: Anschlag
- 25: Federelement
- 28: Schwenkachse
- 31: erste Drehrichtung
- 32: Versatzrichtung
- 100: Passagier
- 120: Lichtquelle
- 130: Lichtkegel

## Patentansprüche

1. System mit einer schwenkbaren Armlehne (1), einem Halterungsmittel (10) und einer Arretierhilfe (18), wobei die Armlehne (1) an dem Halterungsmittel (10) um eine Primärachse (11) verschwenkbar angelenkt ist und über eine Übergangsstellung reversibel zwischen einer Gebrauchsstellung und einer Verstaustellung überführbar ist, wobei die Armlehne (1) drehfest mit einem Verbindungselement (15) verbunden ist, wobei am Verbindungselement (15) die Arretierhilfe (18) angeordnet ist, wobei die Arretierhilfe (18) mit dem Halterungsmittel (10) in einem Kontaktpunkt oder entlang einer Kontaktfläche in reibschlüssigem Kontakt steht, wobei die Arretierhilfe (18) derart ausgestaltet ist, dass der reibschlüssige Kontakt zwischen Halterungsmittel (10) und Arretierhilfe (18) in einer Übergangsstellung größer ist als
-- in der Gebrauchsstellung und/oder
-- in der Verstaustellung, wobei die Arretierhilfe (18) einen verschiebbaren Teil (16) umfasst, wobei der verschiebbare Teil (16) relativ zum Verbindungselement (15) entlang einer Versatzrichtung (32) verschiebbar ist, wobei ein Federelement (25) an einem ersten Ende im Wesentliche ortsfest zum Verbindungselement (15) angeordnet ist, wobei das Federelement (25) an einem zweiten Ende mit dem verschiebbaren Teil (16) verbunden ist, wobei das Halterungsmittel (10) derart ausgestaltet ist, dass der Abstand zwischen
-- dem ersten Ende des Federelements (25) und
-- dem Kontaktpunkt oder der Kontaktfläche kleiner ist in der Übergangsstellung als in der Gebrauchsstellung oder Verstaustellung, **dadurch gekennzeichnet, dass** das Halterungsmittel (10) eine Führungskappe (12) aufweist, wobei die Führungskappe (12) den Abstand zwischen
-- dem ersten Ende des Federelements (25) und
-- dem Kontaktpunkt oder der Kontaktfläche
für die Gebrauchsstellung, die Übergangsstellung und die Verstaustellung festlegt.

2. System gemäß Anspruch 1, wobei die Arretierhilfe (18) das Federelement (25) mit einer Rückstellkraft aufweist, wobei das Federelement (25) zwischen dem Verbindungselement (15) und dem Halterungsmittel (10) angeordnet ist.

3. System gemäß einem der Ansprüche 1 oder 2, wobei der verschiebbare Teil der Arretierhilfe (18) einen Hohlkörper (16) aufweist, wobei der Hohlkörper (16) zumindest teilweise das Verbindungselement (15) und das Federelement (25) umhüllt.

4. System gemäß einem der Ansprüche 1 bis 3, wobei der verschiebbare Teil der Arretierhilfe (18) einen Vorsprung aufweist, wobei der Vorsprung derart ausgestaltet ist, dass der Vorsprung in reibschlüssigem Kontakt steht mit dem Halterungsmittel (10).

5. System gemäß einem der Ansprüche 1 bis 4, wobei die Arretierhilfe (18) derart ausgestaltet ist, dass das Federelement (25) den verschiebbaren Teil (16) der Arretierhilfe (18) gegen das Halterungsmittel (10) drückt.

6. Rückenlehne (2) aufweisend ein System mit einer schwenkbaren Armlehne (1) und einer Arretierhilfe (18) gemäß einem der vorhergehenden Ansprüche.

7. Fahrzeugsitz aufweisend ein System mit einer schwenkbaren Armlehne(1) und einer Arretierhilfe (18) gemäß einem der Ansprüche 1 bis 5.

## Claims

1. System having a pivotable armrest (1), a bracket means (10) and a locking aid (18), wherein the armrest (1) is articulated on the bracket means (10) so as to be pivotable about a primary axis (11) and can be transferred reversibly between a usage position and a stowage position via a transition position, wherein the armrest (1) is connected rotationally conjointly to a connecting element (15), wherein the locking aid (18) is arranged on the connecting element (15), wherein the locking aid (18) is in frictionally engaging contact with the bracket means (10) at a contact point or along a contact surface, wherein the locking aid (18) is designed such that the frictionally engaging contact between bracket means (10) and locking aid (18) in a transition position is greater than that
- in the usage position and/or
- in the stowage position,
wherein the locking aid (18) comprises a displaceable part (16), wherein the displaceable part (16) is displaceable relative to the connecting element (15) along an offset direction (32),
wherein a spring element (25) is, at a first end, arranged substantially positionally fixedly relative to the connecting element (15), wherein the spring element (25) is connected at a second end to the displaceable part (16), wherein the bracket element (10) is designed such that the spacing between
- the first end of the spring element (25) and
- the contact point or the contact surface is smaller in the transition position than in the usage position or stowage position,
**characterized in that** the bracket means (10) has a guide cap (12), wherein the guide cap (12) defines the spacing between
- the first end of the spring element (25) and
- the contact point or the contact surface for the usage position, the transition position and the stowage position.

2. System according to Claim 1, wherein the locking aid (18) has the spring element (25) with a restoring force, wherein the spring element (25) is arranged between the connecting element (15) and the bracket means (10).

3. System according to either of Claims 1 and 2, wherein the displaceable part of the locking aid (18) has a hollow body (16), wherein the hollow body (16) at least partially encases the connecting element (15) and the spring element (25) .

4. System according to one of Claims 1 to 3, wherein the displaceable part of the locking aid (18) has a projection, wherein the projection is designed such that the projection is in frictionally engaging contact with the bracket means (10).

5. System according to one of Claims 1 to 4, wherein the locking aid (18) is designed such that the spring element (25) presses the displaceable part (16) of the locking aid (18) against the bracket means (10).

6. Backrest (2) which has a system having a pivotable armrest (1) and having a locking aid (18) according to one of the preceding claims.

7. Vehicle seat which has a system having a pivotable armrest (1) and having a locking aid (18) according to one of Claims 1 to 5.

## Revendications

1. Système pourvu d'un accoudoir pivotant (1), d'un moyen de support (10) et d'un auxiliaire de blocage (18), dans lequel l'accoudoir (1) est articulé sur le moyen de support (10) de façon pivotante autour d'un axe primaire (11) et peut être déplacé via une position de transition de façon réversible entre une position d'utilisation et une position de rangement, dans lequel l'accoudoir (1) est relié de façon calée en rotation à un élément de liaison (15), dans lequel l'auxiliaire de blocage (18) est disposé sur l'élément de liaison (15), dans lequel l'auxiliaire de blocage (18) est en contact de friction avec le moyen de support (10) en un point de contact ou le long d'une face de contact, dans lequel l'auxiliaire de blocage (18) est configuré de telle manière que le contact de friction entre le moyen de support (10) et l'auxiliaire de blocage (18) soit plus grand dans une position de transition que
- dans la position d'utilisation et/ou
- dans la position de rangement,
dans lequel l'auxiliaire de blocage (18) comprend une pièce déplaçable (16), dans lequel la pièce déplaçable (16) est déplaçable par rapport à l'élément de liaison (15) le long d'une direction de décalage (32), dans lequel un élément de ressort (25) est disposé à une première extrémité de façon essentiellement fixe par rapport à l'élément de liaison (15), dans lequel l'élément de ressort (25) est relié par une seconde extrémité à la pièce déplaçable (16), dans lequel le moyen de support (10) est configuré de telle manière que la distance entre
- la première extrémité de l'élément de ressort (25) et
- le point de contact ou la face de contact soit plus petite dans la position de transition que dans la position d'utilisation ou dans la position de rangement,
**caractérisé en ce que** le moyen de support (10) présente une coiffe de guidage (12), dans lequel la coiffe de guidage (12) fixe la distance entre
- la première extrémité de l'élément de ressort (25) et
- le point de contact ou la face de contact pour la position d'utilisation, la position de transition et la position de rangement.

2. Système selon la revendication 1, dans lequel l'auxiliaire de blocage (18) présente l'élément de ressort (25) avec une force de rappel, dans lequel l'élément de ressort (25) est disposé entre l'élément de liaison (15) et le moyen de support (10).

3. Système selon une des revendications 1 ou 2, dans lequel la pièce déplaçable de l'auxiliaire de blocage (18) présente un corps creux (16), dans lequel le corps creux (16) enveloppe au moins en partie l'élément de liaison (15) et l'élément de ressort (25).

4. Système selon l'une quelconque des revendications 1 à 3, dans lequel la pièce déplaçable de l'auxiliaire de blocage (18) présente une saillie, dans lequel la saillie est configurée de telle manière que la saillie se trouve en contact de friction avec le moyen de support (10).

5. Système selon l'une quelconque des revendications 1 à 4, dans lequel l'auxiliaire de blocage (18) est configuré de telle manière que l'élément de ressort (25) pousse la pièce déplaçable (16) de l'auxiliaire de blocage (18) contre le moyen de support (10).

6. Dossier (2) présentant un système pourvu d'un accoudoir pivotant (1) et d'un auxiliaire de blocage (18) selon l'une quelconque des revendications précédentes.

7. Siège de véhicule présentant un système pourvu d'un accoudoir pivotant (1) et d'un auxiliaire de blocage (18) selon l'une quelconque des revendications 1 à 5.
